# EUROPEAN PATENT APPLICATION

(11) **EP 4 821 386 A1**
(43) Date of publication of application: **14.10.2026**
(21) Application number: 26171693.0
(22) Date of filing: 10.04.2026
(51) Int. Cl.: A43B 1/00

(54) **METHOD FOR THE PRODUCTION OF A SEMI-FINISHED PRODUCT THROUGH THE USE OF RECYCLED MATERIAL AND DIRECTLY OBTAINED SEMI-FINISHED PRODUCT**

(30) Priority: 11.04.2025 IT 202500008154
(71) Applicant: Rogante, Carlo-Giuseppe, 62100 Macerata (MC) (IT)
(72) Inventor: ROGANTE, Carlo-Giuseppe, 62100 Macerata (MC) (IT); BIRROZZI, Alfredo, 62020 Belforte del Chienti (MC) (IT)
(74) Representative: Fiume, Orazio

(57) **Abstract**

The invention discloses a method for manufacturing a semi-finished product, in particular a shoe sole obtained by molding and a directly obtained semi-finished product, wherein the method comprises a first step of preparing an additivated compound (5), obtained by mixing one or more recycled materials reduced to granules chosen from recycled textile material, recycled leather, cellulose, recycled plastic material and added with a binder; a second step of introducing said mixture (5) into a mold; and a third step carried out during the second step of introducing a casting material (6) such as polyurethane or EVA (Ethylene Vinyl Acetate) into the mold.

## Description

### TECHNICAL FIELD

The present invention concerns a method for the production of a semi-finished product, in particular a shoe sole obtained by moulding and containing a high quantity of recycled material reduced to granules and added additives, making the semi-finished product eco-sustainable, contributing to the reduction of the need for new natural resources and to the reduction of the quantity of waste destined for dump.

### STATE OF THE ART

It's well known that in industrial environments there is an increasing effort to respond to growing sustainability pressures. For example, in the footwear industry, shoe production involves the use of virgin materials such as leather, rubber, plastic, and fabrics, which require natural resources and energy and generate waste. However, with growing environmental awareness and increasingly stringent regulations, the industry is seeking alternative solutions, and recycled materials have become a key resource for footwear. The concept of the circular economy is one of the aspects driving the footwear industry toward the use of recycled materials. Rather than relying on a "produce-consume-dispose" model, the circular economy focuses on creating a continuous cycle of reusing materials, minimizing waste. This principle is radically changing the way footwear manufacturers design their products.

The recycled materials that have been used so far in the footwear sector are the following:
- recycled rubber to create more durable and high-performance shoe soles;
- recycled plastic to produce lightweight, durable, and long-lasting shoes;
- recycled textile materials to produce uppers or linings for shoes.

However, at the current state of the art, the use of recycled textile materials together with other recycled materials for the production of a semi-finished product, in particular a shoe sole, is not known.

Document US 2019/366590 A1 describes manufacturing systems, methods, and devices for forming athletic footwear using waste or scrap plastic materials, which may include thermoplastic elastomers or ethylene-vinyl acetate, in which:
- the recycled material is processed with a foaming agent and then inserted into an internal cavity of a final mold shaped like the footwear; subsequently,
- the processed recycled material is heated above the foaming agent's activation limit temperature, causing the foaming agent to expand the recycled material and fill the internal cavity of the final mold.

The result is a footwear article.

Document US 2010/293814 A1 describes manufactured articles having at least one portion prepared using recycled material, including recycled rubber or other polymeric materials. The articles may incorporate the recycled materials in granulated form. In specific embodiments, the article comprises a shoe; in particular, all or part of the shoe sole may be formed using the granulated material, the granules being specifically bonded together using a binding material, such as a polyurethane, preferably a single-component moisture-curing polyurethane binder. The invention also provides methods for preparing articles made from granulated materials.

### PURPOSES AND SUMMARY OF THE INVENTION

The purpose of the present invention is to create a method for producing a semi-finished product comprising an additive mixture, obtained by mixing one or more recycled materials reduced to granules selected from recycled textile material, recycled leather, recycled plastic material and added with a binder.

Another purpose of the present invention is to create a method for producing a semi-finished product comprising one or more recycled textile materials and other recycled materials, designed to offer greater elasticity and cushioning, improving comfort during everyday use. This is particularly advantageous in the footwear industry, especially in sports or casual footwear, where comfort is a priority.

A further purpose of the present invention is to create a method for producing a semi-finished product comprising one or more recycled textile materials and other recycled materials mixed with a rubber-type casting material such as polyurethane or EVA (Ethylene Vinyl Acetate) to create semi-finished shoe sole products that are lighter than traditional semi-finished products made entirely of rubber or plastic. This makes the shoe more comfortable to wear for long periods.

A further purpose of the present invention is to create a method for producing a semi-finished product comprising one or more recycled textile materials and other recycled materials which involves the reuse of fabrics which are difficult to recycle since some textile materials, which could be difficult to recycle for the production of uppers, can instead be successfully used for the production of other types of semi-finished products, such as for example footbeds or treads, thus reducing the environmental impact.

These purposes are achieved through a method for producing a semi-finished shoe sole product in which the recycled material is a granular material mixed with a binder that can be inserted into the mold in various ways:
- in granular form; or
- the granules are mixed with a rubber (such as polyurethane or EVA); or
- a compacted material inserted into the semi-finished product in the form of inserts that are subsequently joined, through a molding process, to a rubber (such as polyurethane or EVA). According to a preferred embodiment of the invention, the semi-finished product defines a shoe sole or a footbed configured to be inserted inside a shoe, or alternatively to form a tread when completed with an outsole configured to contact the ground.

According to a first aspect, the problem described above is solved by a method for the production of a semi-finished product, in particular of a sole for shoe as defined in claim 1 and by its preferential embodiments, defined in dependent claims 2 - 10.

According to another aspect, the present invention relates to a semi-finished product of a shoe sole defined by claims 11-14.

### BRIEF DESCRIPTION OF THE DRAWINGS

The present invention is described in detail below, by way of example and not limitation, with reference to the attached drawings, in which:
- figure 1 shows an exploded axonometric view of the bottom mold and a shell configured to be inserted into the bottom mold of a mold for the production of a shoe sole;
- figure 2 shows an axonometric view of the bottom mold of a mould in which the shell of fig. 1 has been inserted inside a cavity;
- figure 3 shows an exploded axonometric view of the bottom mold, a shell and a cover mold on which at least one insert made of compacted recycled material has been positioned;
- figure 4 shows a side view of what is described in Fig. 3;
- figure 5 shows an axonometric view of the bottom mold with the shell inside it, inside which polyurethane has been poured, and a cover mold on which at least one insert made from compacted recycled material has been positioned;
- figure 6 shows an axonometric view of a shoe sole comprising a shell inside which polyurethane has been poured and at least one insert made of recycled material is incorporated inside the polyurethane.

The same numbers and reference letters in the figures identify the same elements or components or functions.

The elements and features illustrated in the various preferred embodiments, including the drawings, may be combined with each other without departing from the scope of protection of this application as described below.

### DETAILED DESCRIPTION OF THE INVENTION

This detailed description takes as an example the production of a shoe sole SS in which the recycled material is in the form of inserts 5, however this example is not to be considered limiting with respect to the inventive concept of the present invention.

With reference to the attached figures, 1 indicates a bottom mold of a mould for the production of a shoe sole SS, 2 indicates a cavity of the bottom mold 1, 3 indicates a previously moulded shell and preferably made of plastic material, 4 indicates a cover mold of a mould for the production of a shoe sole, 5 indicates at least one insert made of compacted recycled material, 6 indicates a casting material to be cast inside the cavity 2 of the bottom mold **1.** According to an alternative embodiment, the shell 3 is made of leather or fabric.

According to a preferred - but not limiting - embodiment, the basic idea of the present invention is to create a shoe sole SS which comprises a shell 3 having the purpose of giving shape to the sole.

Shell 3 is intended to be a body comprising a base portion BP configured to contact the ground, also referred to as the "tread," and a perimeter portion PP raised with respect to said base portion BP and made integral with the latter. The base portion BP and the perimeter portion PP define a recess R configured to receive a casting material 6 within it.

Therefore, the shell 3 is internally hollow and filled with a casting material 6.

Furthermore, shell 3 is to be understood as a known shell, previously printed and therefore produced using a method not covered by this patent application. Therefore, this shell 3 is produced using a known manufacturing method that is prior to the manufacturing method of the shoe sole covered by this patent application.

Preferably, the shell 3 is made by moulding in plastic material chosen from: polyurethane (PU), thermoplastic polyurethane (TPU), thermoplastic elastomeric material (TR), rubber.

A shoe sole SS generally comprises a first surface designed to contact the ground, also known as the "tread," and a second surface, opposite to the first, designed to contact the user's foot, called "insole". The raised perimeter portion PP of the shell 3 mentioned above, in use, is configured to contain the insole when the shoe sole SS is complete.

It is clarified that the tread represented by the base portion BP of the shell 3 is to be considered the same tread as the first face of the shoe sole SS.

According to a first embodiment, the recycled material comprises one or more of the following: recycled textile material, recycled leather, cellulose, recycled plastic material (such as EVA (Ethylene Vinyl Acetate), TPU (Thermoplastic Polyurethane), PVC (Polyvinyl Chloride), TR (Thermoplastic Rubber), rubber) derived, for example, but not limited to, from shredded recycled soles. Said recycled material is shredded and reduced to granules of variable size depending on the application and compactness, preferably with a granulometric range between 0.1 mm and 50 mm.

These granules are added with a known binder that serves to stably bind the mixture of recycled granular material. The binder can be, for example, a blend of natural rubber and recycled rubber, or PET (acronym for Polyethylene Terephthalate, a thermoplastic plastic resin belonging to the polyester family) brought to the melting point, or even potato starch or TPU.

Insert 5 is made from compacted and die-cut recycled material. The at least one insert 5 represents a part of the filling of the cavity 2 once a casting material 6 has reached maturity since the at least one insert 5 in its thickness remains embedded within the casting material 6 while its upper surface remains flush with an upper edge of the perimeter portion PP of the shell 3.More specifically, if insert 5 is made from recycled material comprising only recycled textile material, it is preferably obtained through the following steps:
- SEPARATION: the clothing, objects, footwear, bags, scraps, etc., which can be of various types such as cotton, wool, and synthetics, are subjected to an initial inspection to remove anything that is not woven;
- DEFIBRATING: the recycled textile material is reduced to fibers using a commonly used machine;

- ADDITIVIZATION: the fabric fibers are added with a known binder;
- NEEDLING AND PANEL FORMATION: the fabric fibers are needled or woven using a commonly used machine to form a panel;
- PANEL PRESSING: the panel is pressed and compacted to provide rigidity and the desired thickness (between 1 mm and 1000 mm) using a commonly used machine with the following parameters:
   - pressure: 90/110 BAR;
   - pressure temperature: 90/130°C;
   - pressing time: 150/300 seconds;
- PANEL DIE-CUTTING: the panel is die-cut to the shape best suited to exploiting the casing's surface, creating at least one insert 5.

In the case where insert 5 is made with other recycled materials in addition to the textile material, the mix of recycled materials is always added with the known binder, pressed and finally die-cut.

It should be noted that when the insert is used to produce a semi-finished product for footwear, its thickness is preferably between 1 mm and 150 mm. The insert thickness can reach values of approximately 1000 mm when this method is implemented for the production of semi-finished products that do not belong to the footwear sector.

Also according to the first embodiment, the casting material 6 is a rubber, preferably but not limited to polyurethane or EVA (Ethylene Vinyl Acetate).

The casting material 6 represents the second filling part of the cavity 2 of the bottom mold 1 and therefore has the purpose of completely filling said cavity 2 so as to provide a predetermined volume. The shell 3 has the purpose of giving shape to the shoe sole SS and of containing the casting material 6 and the recycled material, in which the latter is reduced to granules and added with additives and which, according to the first embodiment, is in the form of at least one insert 5.

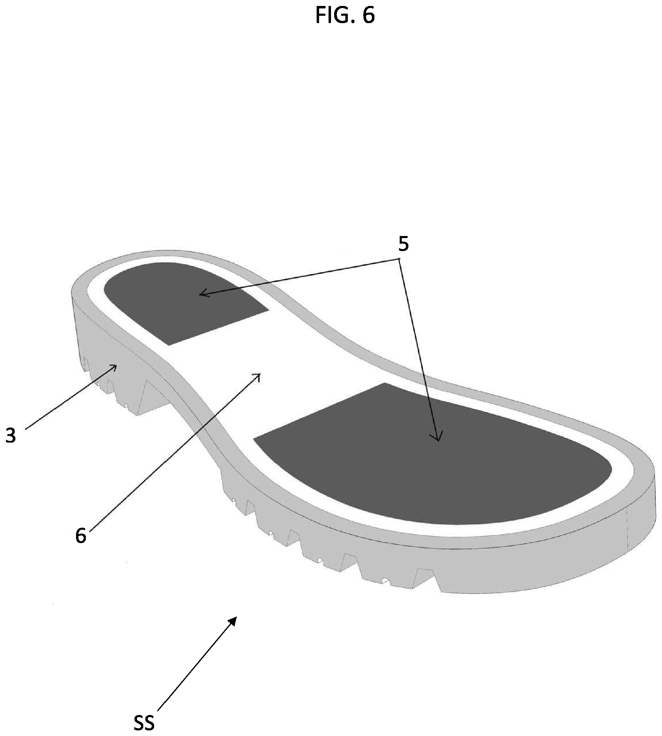

Fig. 6 shows the finished shoe sole SS, made according to the first embodiment, wherein the casting material 6 is a polyurethane and is cast inside the recess RR of the shell 3 and contacts the perimeter portion PP of the shell 3 itself. The polyurethane 6 incorporates at least one insert 5, which may be a single insert 5 extending from the heel to the tip of the foot or may be two separate inserts 5, one of which is placed at the heel of the user's foot and the second is placed on the forefoot.

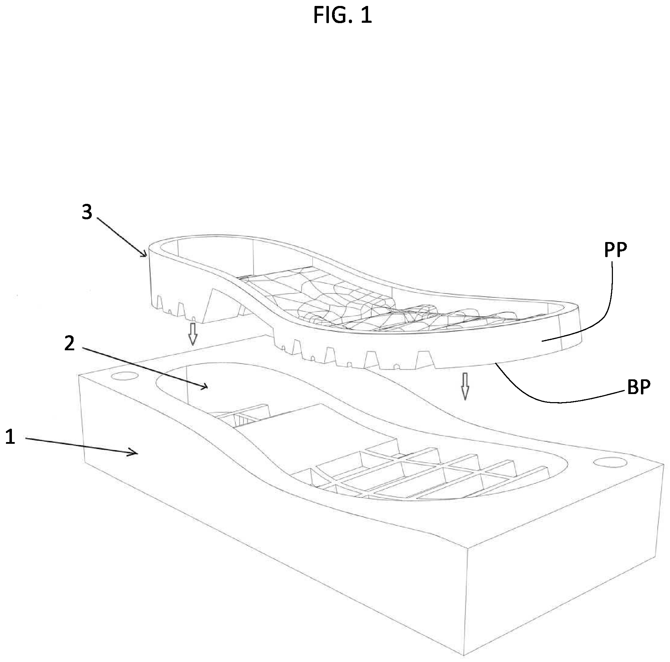

Fig. 1 shows a known, previously printed shell 3 configured to be preliminarily inserted inside a cavity 2 of a bottom mold 1 of a mold for the production of a shoe sole SS in which the base portion BP of the shell 3 contacts the bottom of the cavity 2 and the perimeter portion PP of the shell 3 contacts the edge raised from the bottom of the cavity 2.

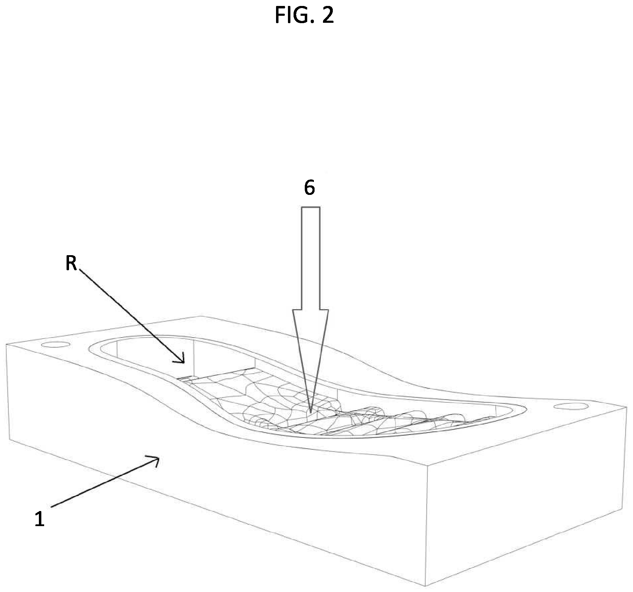

Fig. 2 shows the shell 3 inserted inside the cavity 2. The recess R of the shell 3 is configured to receive the casting material 6 inside it.

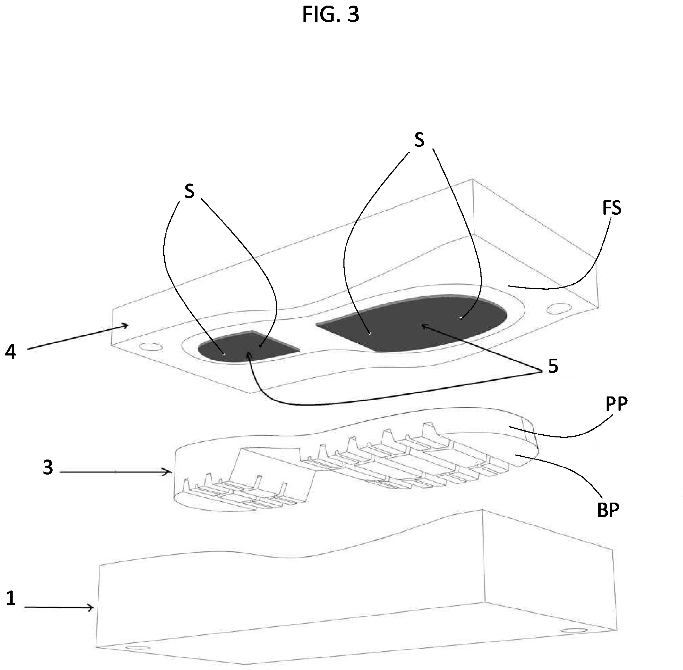

Fig. 3 shows the bottom mold 1, the shell 3 seen from the base portion BP intended to face the cavity 2 of the bottom mold 1 and a cover mold 4 on which, on a first surface FS facing the cavity 2 of the bottom mold 1, at least one insert 5 is loaded. Once the casting material 6 and in this specific case the polyurethane has been poured into the recess R, the cover mold 4 will be brought to abutment against the bottom mold 1 and the at least one insert 5 will adhere to the polyurethane 6 remaining incorporated inside it.

The at least one insert 5 is retained by the first surface FS of the cover mold 4 thanks to the presence of metal protrusions S present on said first surface FS of said cover mold 4. The metal protrusions S therefore represent means configured to retain the at least one insert 5 on the first surface FS of the cover mold 4 before the latter is brought to abut against the bottom mold 1.

The at least one insert 5 adheres to the polyurethane thanks to an adhesive force provided by the still-hot polyurethane. Since the polyurethane is still hot and the cover mold is closed on the bottom mold 1, the at least one insert 5 detaches from the metal protrusions S and remains embedded within the polyurethane.

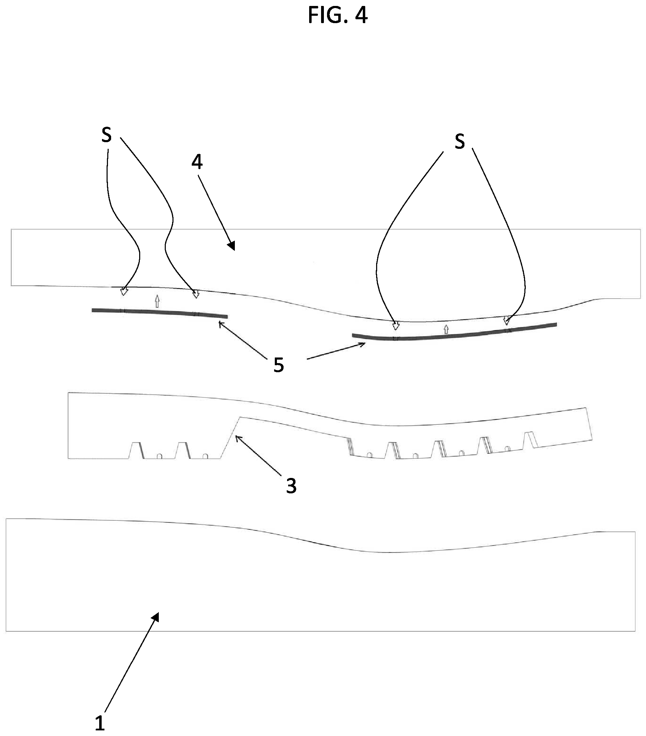

Alternatively to the protrusions S, the insert 5 is retained by the cover mold 4 by means of a suction system (not shown). In Fig. 4, a side view of what was discussed in Fig. 3 is shown. In more detail, it is visible how at least one insert 5 is positioned on the first surface FS of the cover mold 4 before the latter is placed against the bottom mold 1.

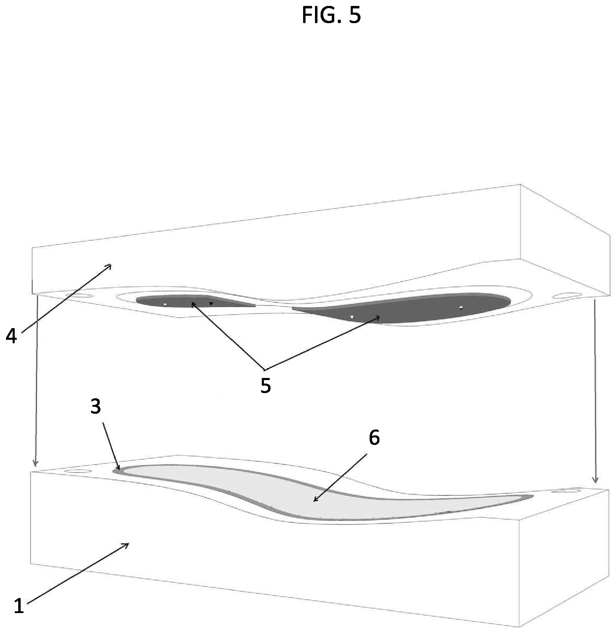

Fig. 5 shows the bottom mold 1 inside which the shell 3 has been inserted into which the polyurethane 6 has been cast, according to the first embodiment. The cover mold 4 has on the first surface FS the at least one insert 5. This represents the step preceding the closing of the cover mold 4 against the bottom mold 1 in which the at least one insert 5 adheres to the polyurethane 6 and remains incorporated inside it.

The casting material 6 is entirely confined within the shell 3 and is not visible from the outside once the shoe sole SS is completed. This means that the primary objective is to obtain a shoe sole SS characterized by a quantity of recycled material in the range of 10% - 70%, a range beyond which the rebound effect and weight support are lost, all known characteristics that make polyurethane the preferred material for filling plastic, leather, or fabric shells.

A second embodiment provides that the recycled material 5 comprises one or more of the following: recycled textile material, recycled leather, cellulose, recycled plastic material (such as EVA, TPU, PVC, TR, rubber) derived, for example, but not limited to, from shredded recycled soles. Said recycled material is shredded and reduced to granules with a size preferably between 0.1 mm and 50 mm.

These granules are added with a known binder and combined with the casting material 6.

What is cast inside a shell 3 is a mixture comprising simultaneously one or more of said recycled materials added with binder and a casting material 6 such as a polyurethane or an EVA.

Even according to the second example, the shoe sole SS comprises a quantity of recycled material in the range of 10% - 70% and is obtained with a method that involves the use of a bottom mold 1, a shell 3 and a cover mold 4.

A third embodiment provides that the recycled material 5 comprises one or more of recycled textile materials, recycled leather, cellulose, recycled plastic materials (such as EVA, TPU, PVC, TR, rubber) derived, for example, but not limited to, from shredded recycled soles. Said recycled material is shredded and reduced to granules with a size preferably between 0.1 mm and 50 mm.

Similarly to the examples of embodiments mentioned above, these granules are added with a known binder.

What is poured inside a shell 3 is the granular material added with binder and subsequently a casting material 6 such as a polyurethane or an EVA.

Without compromising the quality of the finished product, the granulated waste material with binder added can be cast first, followed by the casting material, or the casting material can be cast first, followed by the granulated waste material with binder added. Both the casting material and the granulated waste material with binder added form the filling of shell 3. The first, second and third examples involve the production of a shoe sole SS configured to directly contact the ground.

A fourth embodiment provides a method for producing a semi-finished product in which the semi-finished product is a footbed, also known as an insole or internal sole. The footbed is the internal part of the shoe that comes into contact with the foot, designed to provide support, comfort, and stability. The footbed obtained through the method covered by this patent application could be covered with leather/fabric using known procedures, proprietary to the applicant, and completed with a sole designed to form a base configured to serve as the walking surface.

The manufacturing method of a semi-finished product, specifically a shoe sole obtained by molding, which is the subject of this patent application, comprises the following steps:
- a first step of preparing an additive blend 5, obtained by mixing one or more recycled materials reduced to granules selected from recycled textile material, recycled leather, cellulose, or recycled plastic material, and adding a binder;
- a second step of introducing said blend 5 into a mold;
- a third step, contemporary with the second step, of introducing a casting material 6 into the mold, such as polyurethane or EVA (Ethylene Vinyl Acetate).

According to the first embodiment, the method comprises the further step, previous-contemporary-following the second step, of inserting a previously printed shell 3 into the mould and more specifically inside the cavity 2 of the bottom die 1.

A recess R of the shell 3 therefore assumes substantially the same shape as the cavity 2 of the bottom mold 1. Furthermore, the additive mixture is preformed in at least one insert 5 obtained by die-cutting a panel and is positioned on a first surface FS of a cover mold 4 and is retained on the first surface FS by means of metal protrusions S.

In the second embodiment, the additive blend 5 is combined with the casting material 6 and together they form the filling of the cavity 2 of the bottom mold 1.

In the third embodiment, the additive blend 5 is poured into the cavity 2 either before or after the pouring of the casting material 6. The maturation step of the casting material 6 lasts between 6 and 24 hours and must take place at room temperature or in climate-controlled cells to stabilize the dispersion of the ingredients.

The additivization of recycled granular materials with a known binder involves variable times and temperatures depending on the binding substance used. For example, for natural rubber (NR), the mixing follows specific parameters to ensure good dispersion of the additives and maintain the elastic properties of the material.

Advantageously, thanks to the present invention, materials destined for dump can be separated and recovered and found a new application before being disposed of.

The present invention can be implemented to obtain a shoe sole SS or a fussbett (not shown) in which the percentage of the recycled material in granules can vary from 10% to 70% of the total volume of the semi-finished product.

According to alternative embodiments, the present invention can be implemented to produce:
- a seat for gym equipment; or
- a cushion for use in the interior design and furniture industry, or in the production of beds and mattresses, or in the health and wellness industry, or in the automotive industry; or
- a tile for use as a covering; or
- a sound-absorbing panel for buildings to reduce or control noise in a space;
- a thermal insulation panel to reduce heat transfer between the interior and exterior of a building.

Even according to these alternative embodiments, the percentage of recovered material in granules can vary from 10% to 70% of the total volume of the semi-finished product.

The materials and dimensions of the invention as described above, illustrated in the attached drawings, and claimed below, may be any according to requirements. Furthermore, all details may be replaced with technically equivalent ones, without thereby departing from the protective scope of this patent application.

### LEGEND

1 Bottom mold
2 Cavity of bottom mold
3 Shell
BP Base portion
PP Perimeter portion
R Recess
4 Cover mold
FS First surface
S Metal protrusions
5 Recycled material insert
6 Casting material
SS Shoe sole

## Claims

1. Method for manufacturing a semi-finished product, in particular a shoe sole obtained by molding, the method comprising:
- a first step of preparing an additivated compound (5), obtained by mixing one or more recycled materials reduced to granules, selected from: recycled textile material, recycled leather, cellulose, recycled plastic material, and being additivated with a binder;
- a second step of introducing said additivated compound (5) into a mold;
- and a third step carried out during the second step, of introducing into said mold a casting material (6), such as polyurethane or ethylene vinyl acetate (EVA).

2. The method for manufacturing a semi-finished product according to claim 1, wherein the casting material (6) comprises polyurethane or ethylene vinyl acetate (EVA).

3. The method according to claim 1, wherein the binder is selected from the group consisting of: a compound of natural rubber and recycled rubber, polyethylene terephthalate (PET), potato starch, or thermoplastic polyurethane (TPU).

4. The method according to claim 1, wherein said granules have a particle size distribution that varies depending on the application and the desired compactness, and preferably define a granulometric range between 0.1 mm and 50 mm.

5. The method according to any of claims 1 to 4, further comprising a step, carried out before, during or after said second step, of inserting into the mold a shell (3) previously obtained by molding.

6. The method according to claim 5, wherein said shell (3) is made by molding of plastic material, or is made of leather or fabric.

7. The method according to claim 6, wherein said plastic material is selected from the group consisting of: thermoplastic polyurethane (TPU), polyurethane (PU), thermoplastic elastomer (TR), or rubber.

8. The method according to claim 5, wherein the additivated compound is shaped into at least one insert (5), obtained by die-cutting a panel and introduced into the mold prior to the second step.

9. The method according to claim 8, wherein the mold comprises a bottom mold half (1) and a cover mold half (4), and wherein said at least one insert (5):
- is positioned on a first surface (FS) of the cover mold half (4), said surface facing the bottom mold half (1);
- is retained on said first surface (FS) by means of protrusions (S).

10. The method according to any of claims 1 to 7, comprising a preliminary step of combining the additivated compound (5) with the casting material (6) immediately prior to introducing them into the mold.

11. Semi-finished product, in particular of a shoe sole according to one or more of the preceding claims, **characterised in that** it is made in accordance with one or more of the preceding method claims.

12. The semi-finished product according to claim 11, wherein the amount of recycled granulated materials is comprised within a range of 10% to 70% of the total volume of the semi-finished product.

13. The semi-finished product according to claims 11 or 12, wherein said semi-finished product defines a shoe sole (SS) or a insole.

14. The semi-finished product according to claims 11 or 12, wherein said semi-finished product defines a seat for gym equipment, a seat pad, a cushion, a tile, a sound-absorbing panel for the building industry, or a thermal insulation panel.
